# EUROPEAN PATENT SPECIFICATION

(11) **EP 2 522 900 B1**
(45) Date of publication and mention of the grant of the patent: **09.05.2018**
(21) Application number: 10842002.7
(22) Date of filing: 07.01.2010
(51) Int. Cl.: F21S 9/03, F21S 8/08, F21V 23/04, F21Y 115/10, F21W 131/10, F21W 131/103

(54) **COMPACT PHOTOVOLTAIC SOLAR LIGHT WITH ENERGY SELF-SUFFICIENCY**
KOMPAKTE PHOTOVOLTAIKLEUCHTE MIT ENERGIESELBSTVERSORGUNG
LUMINAIRE SOLAIRE PHOTOVOLTAÏQUE COMPACT À AUTOSUFFISANCE ÉNERGÉTIQUE

(43) Date of publication of application: 14.11.2012
(73) Proprietor: Studio Itinerante Arquitectura, S.L., 08003 Barcelona (ES); Caviasca, Alessandro, 08003 Barcelona (ES)
(72) Inventor: CAVIASCA, Alessandro, E-08003 Barcelona (ES)
(74) Representative: Carvajal y Urquijo, Isabel
(86) International application number: PCT/ES2010/070003
(87) International publication number: WO 2011/083186

(56) References cited:
- EP-A1- 1 852 649
- EP-A1- 1 852 649
- WO-A1-96/20369
- US-A- 4 982 176
- US-A1- 2005 174 762
- US-A1- 2007 052 385
- US-A1- 2008 137 327
- US-A1- 2008 232 094
- US-A1- 2008 298 051
- US-A1- 2009 316 395

## Description

### Object of the Invention:

More specifically the invention refers to a single compact light fixture that includes in its upper part means for capturing and converting solar energy into electricity, in its lower part means for accumulating the energy generated, means for supplying power, regulating the charge of the battery, turning on the lamps, regulating operation of the lamps, the lamps themselves, preferably but not exclusively leds, with the corresponding connection cables between said means.

The light fixture, once fitted on a pedestal, lighting column or other support, is a compact solar lamp with high energy efficiency, for urban and inter-urban areas, combining advanced solar photovoltaic technology called (SPV), with lithium battery technology, LED illumination technology, battery charging and discharging control technology, and dynamic programmable light control when in operation.

It will finally also include an instrument for remote monitoring as well as an AC-DC transformer, in case the user wishes to use the mains when sunlight is insufficient (light fixture located in geographical areas with short periods of sunlight, prolonged bad weather, etc.), or a transformer DC/AC that enables the electrical energy to be delivered to the electricity grid once the batteries are charged.

### State of the Art:

There are a great number of models of light fixtures on the market and they may be considered as state of the art. These are powered by solar energy using the corresponding photovoltaic modules placed in the vicinity, normally on the same lighting column that supports the light fixture with the corresponding bracket that secures the panel to the lighting column.

Basically, the state of the art in this sector can be divided into two types of lamps, normal lamp comprising a:
a. Light fixture.
b. Lighting column support.
c. Cables to connect to the mains,
and standalone photovoltaic lamp that is normally composed of:
A. Light fixture.
B. Lighting column support.
C. Photovoltaic module.
D. Batteries.
E. Control electronics (battery charging and discharging)
F. Cables and connectors between A, C, D and E.

For instance, a conventional photovoltaic module is secured to the pedestal by means of a bracket, the light fixture is fitted either to the end of the pedestal, or to an arm, if secured to a wall, and finally the batteries are housed inside the lighting column or in its base or in a box at the top.

Connection between the PV module, light and battery is by cables that are concealed if the light fixture is fitted to a lighting column inside.

EP1852649 is considered the closest prior art. It shows an example of luminaire with a solar cell, batteries and an illuminant. The battery module is arranged inside a housing

### Scope of the Invention:

The purpose of this invention is a new standalone photovoltaic light fixture, in which the body of the light contains elements A, C, D, E and F, i.e., a compact standalone photovoltaic light fixture applicable to a wall or lighting columns or existing supporting elements, including supporting elements of conventional or photovoltaic lamps, designed as an energy independent product, which means a significant reduction in production costs, increased energy efficiency, and more environmentally friendly, replacing the use of pollutants such as lead used in batteries or mercury in the light, with cleaner technologies.

In this respect, the light fixture presented here uses technology for capturing, in any orientation, solar energy with high energy density and electronics based on sensors and dynamic programming of the light intensity based on intelligent electronics that takes into account the weather history and control of the battery charging, detecting the charge level at every moment, thus reducing the charging and discharging cycles and consequently prolonging the service life of the battery. These improvements enable highly energy-efficient illumination and very easy adaptation of the product to any urban or inter-urban area.

The integration of its components in a single element reduces the time and costs of installation while at the same time facilitating its transport, making the generalised use of sustainable illumination in public spaces more affordable.

Another of the aims of this invention is its easy installation, which enables the use of existing urban lampposts as a support for the standalone photovoltaic compact light fixture in replacement of the old one.

### Description of the Invention:

The light fixture presented here is a compact body, the upper part of which is a flexible photovoltaic surface that also serves as a cover and which rests on the body or housing of the light, which becomes an PV panel, the body of the light fixture in turn holds inside an energy accumulator, a charge regulator for the batteries and a light intensity regulator, for illumination, it incorporates a LED panel on the lower part of the body, formed by a terminal connector and the LED lights, and it has a system to attach it to any urban support (lighting column) or to the wall of a building.

The light fixture collects solar energy with a photovoltaic panel adaptable to any type of light fixture geometry, made with a material sensitive to solar radiation and active in any orientation, which is fitted to the body of the light fixture, which can be installed in an place with a minimum of sunlight, also making use of diffuse light and perfectly adaptable to any structural design thanks to its flexibility.

The solar energy captured by the flexible panel is stored in a lithium polymer battery, thus reducing the weight, thickness and size of the energy accumulation system, which in turn enables its integration on a surface near the light fixture.

In addition, this technology, using a lithium accumulator -this could be replaced by another type of material such as Ni-Mh- free from lead and therefore more environmentally friendly than conventional batteries.

The light fixture incorporates several LEDs and the LED panel is powered by a lithium polymer battery that is close by, so long electric cables are not necessary and therefore energy losses due to voltage drop and heat dissipation are avoided.

The body of the light fixture can also incorporate a wireless repeater which will work with a SIM card to send data from a group of lamps to central control, thus being able to monitor several parameters such as the operation of the lamp and the storage capacity, enabling this data to be customised in order to improve the performance of the standalone light fixture.

Another of the aims of the invention is the possibility of the light fixture presented here to illuminate areas that due to their geographical location are difficult to supply with conventional mains electricity.

The formal characteristics of the light will be multiple, with the possibility of the light fixture having an exterior concave or flat shape or any other shape, in any case, the PV module or light fitting cover can be opened to access the body of the light fixture for checking, maintenance and replacement of components.

Other details and characteristics shall be shown throughout the description below referring to drawings attached to this report which are shown for illustrative but not limiting purposes only in a drawing of the invention.

### Description of the drawings:

Figure 1 is a side elevation view of a standalone photovoltaic lamp post (10) according to the state of the art, which in one of the possible embodiments, is formed by a support column (11), an arm (24), a light fixture (25) and a base (22), which houses a battery (21) and the control electronics (19).
Figure 2 is a section view of the invention (compact standalone photovoltaic light fixture) without the support column (11).
Figure 3 is an example of a standalone photovoltaic lamp post (10), with two light fixtures (12), incorporated to a column (11).
Figure 4 is a compact standalone solar photovoltaic light fixture (object of the invention) (12) in one of the multiple possible versions in open position on rotating the upper part the photovoltaic panel (13), with regard to the body (14) of the light fixture (12).
Figure 5 is an alternative embodiment of the standalone photovoltaic lamp post seen in figure 3.
Figure 6 is an alternative embodiment of the standalone photovoltaic light fixture (12) as shown in figure 2, indicating in a dotted line the movement of the cover with the photovoltaic panel (13).

Below is a numbered list for the different parts of the invention, which are indicated in the above drawings; (10) standalone photovoltaic lamp post, (11) support column, (12) standalone photovoltaic light fixture, (13) Photovoltaic panel, (14) body of the light fixture (12), (15) glass, (18) terminal connector, (19) charging and intensity control regulator, (20) LEDs, (21) batteries, (22) base of (11), (23) conventional photovoltaic module, (24) arm, (25) conventional light fixture, (26) hinge.

### Description of a preferred embodiment of the invention:

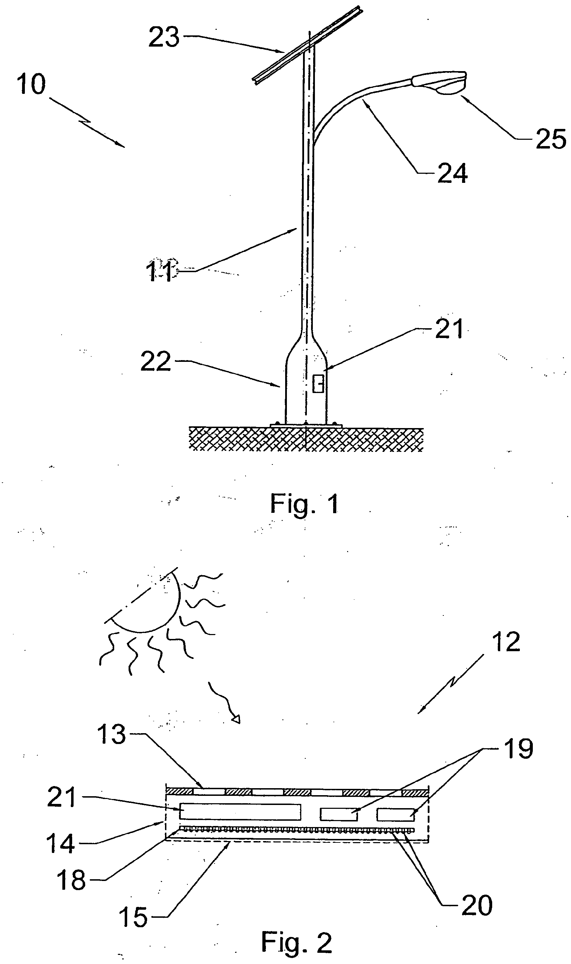

In one of the embodiments according to the current state of the art, as can be seen in figure 1, a standalone photovoltaic lamp post (10) is formed by column or lighting column (11), at the upper part of which are means to attach a light fixture (25), and the light fixture (25) itself, which rests on a column or lighting column (11) with the aid of an arm (24), at the base of which (22) are the batteries (21) that are charged by the photovoltaic module (23).

The light fixture (12) object of the invention comprises in a single body (14) the following elements:
- Energy capture.
- Storage of the energy collected and charging and light adjustment electronics.
- Switch on.
- Generating light.
- Remote monitoring of the light fixtures.
- Presence sensor/s.
- AC/DC converter (optional)

Specifically the light fixture (12) as shown in figure 2 presents a body (14), in the upper part of which fits means to capture energy, such as a photovoltaic panel (13) of a size such that it (13) is integrated into the body (14), not as a separate element from (12), but rather forming part of the same body (14), without altering the exterior dimensions of the body.

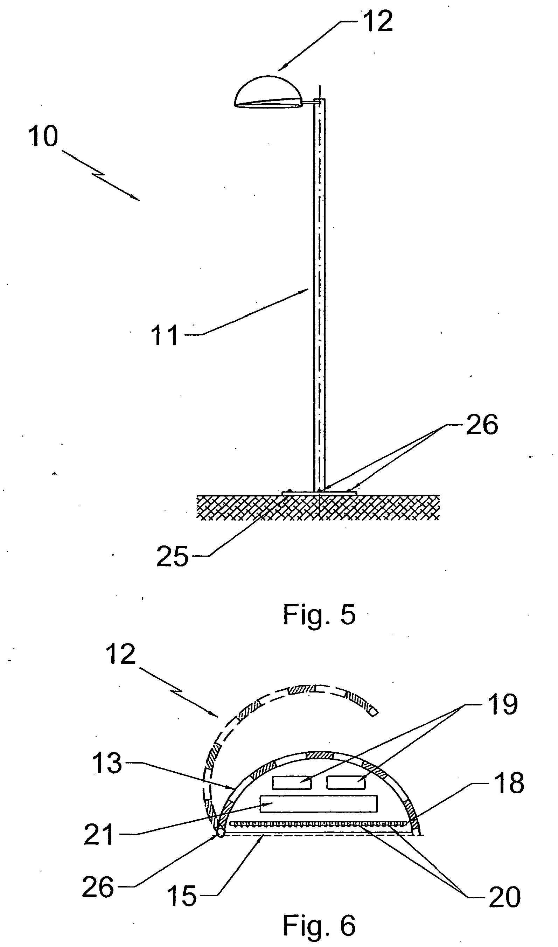

The fact that the means for capturing energy, such as the panel (13) is flexible, enables it to be adapted to any type of exterior configuration of light fixture (12), as shown in figure 6 as an example.

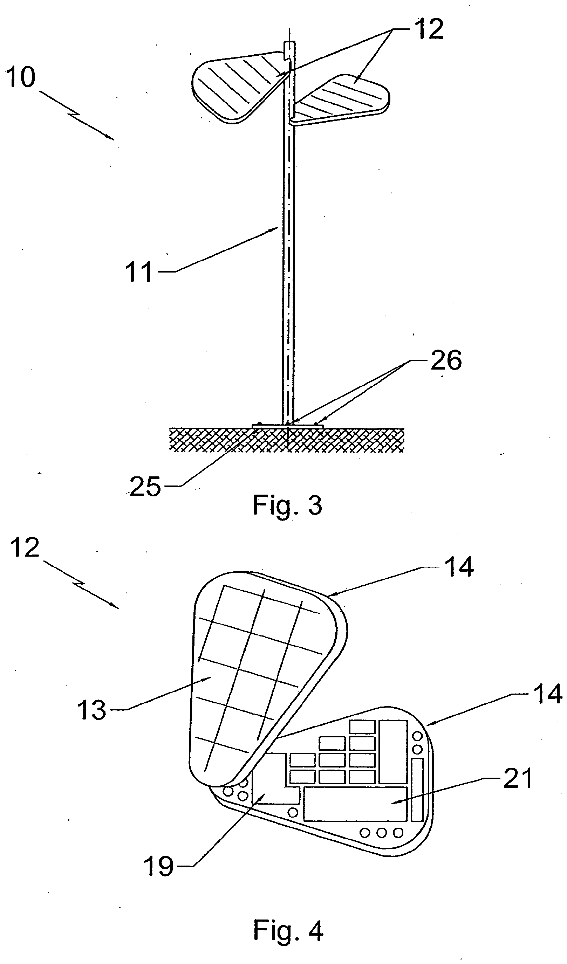

Figure 3 shows a possible embodiment of the invention, in which the light fixtures (12) are implemented on a column or lighting column (11) that is secured directly to the ground.

Figure 4 shows how the panel (13) can turn with regard to the body (14) revealing the internal elements of the light fixture (12), the body (14) being attached to the column (11), having inside (14) a cavity for housing the components (18), (19), (20), (21), also having a cavity or universal system for attaching it to the support column (11) (not represented in the figures).

The photovoltaic panel (13), in one of the possible embodiments, consists of a silicon crystal or thin-film technology (amorphous silicon or CIGS/CIS) module with a power of 40w or 80w, or 120w or 160w for instance or adequate for the application. The panel transforms solar energy into DC electrical energy.

Inside the body (14) of the light fixture (12) are fitted by welding, rivets, screws or the like, light generating means such as one or more terminal connectors (18), each terminal connector containing (18) one or more high power latest generation LED units (20) such as (1001m/W for instance), placing between the LEDs (20) or near to them a battery (21), means for regulation comprising a charge control regulator and light intensity regulator (19).

In an alternative version, the LEDs (20) could incorporate an individual battery or a battery for each group of LEDs.

The battery (21) in one of the possible embodiments would be of the lithium polymer type, which has a high-density energy storage technology with advantages such as low weight and thickness, deep discharge and medium-high service life in dynamic usage.

On any point of the body (14) of the light fixture (12) there are one or more presence sensors, so that in some types of installations using the light fixture described here, the light intensity can be adjusted according to needs, even switching off the light if it is desired that the light fixture (12) is only active in presence of vehicles or people.

Another feature of the invention, with the aim of distance monitoring, the body (14) of the light fixture (12) incorporates means for wireless remote control, such as a wireless repeater, that will enable the control of different light fixtures according to all types of operation programmes.

Having sufficiently described this invention using the figures attached, it is easy to understand that any modification may be made to the detail which may be deemed to be appropriate, whenever these changes do not alter the essence of the invention summarised in the following claims.

## Claims

1. COMPACT PHOTOVOLTAIC SOLAR LIGHT FIXTURE WITH ENERGY SELF-SUFFICIENCY, comprising at least one photovoltaic panel (13), a light fixture (12) having a single compact body (14) with a photovoltaic panel (13) arranged on the top and wherein terminal connectors (18), LEDs (20), batteries (21) for storing the energy received by the at least one photovoltaic panel (13), and means (19) for regulation of the charging of the batteries (21) which are inside said body (14), **characterised in that**
the said at least one photovoltaic panel (13) is a flexible, photovoltaic panel (13), which is adaptable to any type of light fixture geometry, and which is integrated into said body (14), thereby forming a part of the same body (14),
inside said body (14) are also means (19) for control of light intensity,
means for detecting presence of vehicles or people and means for enabling remote control of the light fixture (12).

2. COMPACT PHOTOVOLTAIC SOLAR LIGHT FIXTURE WITH ENERGY SELF-SUFFICIENCY, according to the preceding claims **characterised in that** the charging control regulator and light intensity regulator (19) form a single unit.

3. COMPACT PHOTOVOLTAIC SOLAR LIGHT FIXTURE WITH ENERGY SELF-SUFFICIENCY, according to the claim 1, **characterised in that** on any point of the body (14) of the light fixture (12) there are one or more presence sensors.

4. COMPACT SOLAR LIGHT FIXTURE WITH ENERGY SELF-SUFFICIENCY, according to the claim 1, **characterised in that**, for monitoring one or more light fixtures (12) the body (14) incorporates means for monitoring the light fixtures (12) and for sending and receiving data the body incorporates means for transmitting data such as a wireless or radio-frequency transmitter (23), and a SIM card.

5. COMPACT SOLAR LIGHT FIXTURE WITH ENERGY SELF-SUFFICIENCY, according to the claim 1, **characterised in that** the photovoltaic panel (13) can turn with regard to the body (14) of the light fixture (12) to facilitate the maintenance of the light fixture.

6. COMPACT SOLAR LIGHT FIXTURE WITH ENERGY SELF-SUFFICIENCY, according to the claim 1, **characterised in that** the light fixture (12) can be attached to any existing column or support (11) as it has inside a cavity with a universal anchoring system, to which the free end of the column is fitted (11).

7. COMPACT SOLAR LIGHT FIXTURE WITH ENERGY SELF-SUFFICIENCY, according to the claim 1, **charaterised** in that the light fixture (12) includes an AC-DC transformer for main power supply when the batteries have run down and an DC-AC transformer to deliver energy to the grid when the batteries are fully charged.

8. COMPACT SOLAR LIGHT FIXTURE WITH ENERGY SELF-SUFFICIENCY, according to the claim 1, **characterised in that** the photovoltaic panel (13) has a silicon crystal or thin-film technology (amorphous silicon or CIGS/CIS) module with a power of 40W or 80W, or 120W or 160W.

## Patentansprüche

1. Kompakte photovoltaische Solarlampenfassung mit Energieselbstversorgung, umfassend mindestens ein Photovoltaikpaneel (13), eine Lampenfassung (12), die einen einzelnen kompakten Körper (14) mit einem Photovoltaikpaneel (13) aufweist, das auf der Oberseite angeordnet ist, wobei Endanschlüsse (18), LEDs (20), Batterien (21) zum Speichern von Energie vorgesehen, die durch das mindestens eine Photovoltaikpaneel (13) empfangen wird, und Einrichtungen (19) zum Regulieren der Ladung der Batterien (21), die innerhalb des Körpers (14) sind, **dadurch gekennzeichnet, dass**
das mindestens eine Photovoltaikpaneel (13) ein flexibles Photovoltaikpaneel (13) ist, das an jeden Typ von Lampenfassungsgeometrie angepasst werden kann und das in dem Körper (14) integriert ist, wodurch es Teil des gleichen Körpers (14) bildet,
wobei innerhalb des Körpers (14) auch Einrichtungen (19) zum Steuern der Lichtintensität,
Einrichtungen zum Erfassen der Gegenwart von Fahrzeugen oder Menschen und
Einrichtungen zum Aktivieren der Fernsteuerung der Lampenfassung (12) vorgesehen sind.

2. Kompakte photovoltaische Solarlampenfassung mit Energieselbstversorgung nach einem der vorhergehenden Ansprüche, **dadurch gekennzeichnet, dass** der Aufladesteuerregler und der Lichtintensitätsregler (19) eine einzelne Einheit bilden.

3. Kompakte photovoltaische Solarlampenfassung mit Energieselbstversorgung nach Anspruch 1, **dadurch gekennzeichnet, dass** an jeder Stelle des Körpers (14) der Lampenfassung (12) einer oder mehrere Anwesenheitssensoren vorhanden sind.

4. Kompakte Solarlampenfassung mit Energieselbstversorgung, nach Anspruch 1, **dadurch gekennzeichnet, dass** zum Überwachen einer oder mehrerer Lampenfassungen (12) der Körper (14) Einrichtungen zum Überwachen der Lampenfassungen (12) und zum Senden und Empfangen von Daten integriert, wobei der Körper Einrichtungen zum Übertragen der Daten integriert, wie z. B. einen drahtlosen oder Funkfrequenz-Sender (23) und eine SIM-Karte.

5. Kompakte Solarlampenfassung mit Energieselbstversorgung, nach Anspruch 1, **dadurch gekennzeichnet, dass** sich das Photovoltaikpaneel (13) in Bezug auf den Körper (14) der Lampenfassung (12) drehen kann, um die Wartung der Lampenfassung zu erleichtern.

6. Kompakte Solarlampenfassung mit Energieselbstversorgung, nach Anspruch 1, **dadurch gekennzeichnet, dass** die Lampenfassung (12) an jede vorhandene Säule oder Stütze (11) angebracht werden kann, weil sie innen einen Hohlraum mit einem Universalverankerungssystem aufweist, in dem das freie Ende der Säule eingesetzt wird (11).

7. Kompakte Solarlampenfassung mit Energieselbstversorgung, nach Anspruch 1, **dadurch gekennzeichnet, dass** die Lampenfassung (12) einen Wechselstrom-Gleichstromwandler für die Stromnetzversorgung aufweist, wenn die Batterien leer sind, und einen Gleichstrom-Wechselstromwandler zum Abgeben von Energie zu dem Gitter, wenn die Batterien vollständig aufgeladen sind.

8. Kompakte Solarlampenfassung mit Energieselbstversorgung, nach Anspruch 1, **dadurch gekennzeichnet, dass** das Photovoltaikpaneel (13) ein Siliciumkristall- oder ein Dünnfilmtechnologie (amorphes Silicium oder CIGS/CIS)-Modul mit einer Leistung von 40 W oder 80 W oder 120 W oder 160 W aufweist.

## Revendications

1. Luminaire solaire photovoltaïque compact avec une autonomie énergétique, comprenant au moins un panneau photovoltaïque (13), un luminaire (12) ayant un seul corps compact (14) avec un panneau photovoltaïque (13) disposé au-dessus et dans lequel des connecteurs terminaux (18), LEDs (20), des batteries (21) pour stocker l'énergie reçue par le au moins un panneau photovoltaïque (13), et des moyens (19) pour le réglage du chargement des batteries (21) qui sont à l'intérieur dudit corps(14), **caractérisé en ce que**
ledit au moins un panneau photovoltaïque (13) est un panneau photovoltaïque flexible (13), qui est adaptable à n'importe quel type de géométrie de luminaire, et qui est intégré dans ledit corps (14), faisant ainsi partie du même corps (14),
il y a également, à l'intérieur dudit corps (14), des moyens (19) pour le contrôle de l'intensité de la lumière,
des moyens pour détecter la présence de véhicules ou de personnes et des moyens pour permettre le contrôle à distance du luminaire (12).

2. Luminaire solaire photovoltaïque compact avec une autonomie énergétique, selon les revendications précédentes **caractérisé en ce que** le régulateur du contrôle du chargement et le régulateur de l'intensité de la lumière (19) forment une seule unité.

3. Luminaire solaire photovoltaïque compact avec une autonomie énergétique, selon la revendication 1, **caractérisé en ce que** sur n'importe quel point du corps (14) du luminaire (12) il y a un ou plusieurs capteurs de présence.

4. Luminaire solaire compact avec une autonomie énergétique, selon la revendication 1, **caractérisé en ce que**, pour la surveillance d'un ou plusieurs luminaires (12) le corps (14) incorpore des moyens pour surveiller les luminaires (12) et pour envoyer et recevoir des données le corps incorpore des moyens pour transmettre des données tels qu'un émetteur radiofréquence ou sans fil (23), et une carte SIM.

5. Luminaire solaire compact avec une autonomie énergétique, selon la revendication 1, **caractérisé en ce que** le panneau photovoltaïque (13) peut se tourner par rapport au corps (14) du luminaire (12) pour faciliter la maintenance du luminaire.

6. Luminaire solaire compact avec une autonomie énergétique, selon la revendication 1, **caractérisé en ce que** le luminaire (12) peut être fixé à n'importe quelle colonne ou support (11) existant étant donné qu'il a à l'intérieur une cavité avec un système d'ancrage universel, dans laquelle l'extrémité libre de la colonne est installée (11).

7. Luminaire solaire compact avec une autonomie énergétique, selon la revendication 1, **caractérisé en ce que** le luminaire (12) comporte un transformateur AC-DC pour l'alimentation électrique principale lorsque les batteries sont complètement déchargées et un transformateur AC-DC pour fournir de l'énergie au réseau lorsque les batteries sont complètement chargées.

8. Luminaire solaire compact avec une autonomie énergétique, selon la revendication 1, **caractérisé en ce que** le panneau photovoltaïque (13) a un module de silicium cristallin ou de technologie à couches minces (silicium amorphe ou CIGS/CIS) avec une puissance de 40 W ou 80 W, ou 120 W ou 160 W.
